# EUROPEAN PATENT APPLICATION

(11) **EP 4 645 555 A1**
(43) Date of publication of application: **05.11.2025**
(21) Application number: 24907715.7
(22) Date of filing: 17.10.2024
(51) Int. Cl.: H01M 50/262, H01M 50/507, H01M 50/517

(54) **CELL BLOCK-FIXING STRUCTURE FOR ASSEMBLING BATTERY MODULES**

(30) Priority: 22.12.2023 KR 20230189884
(71) Applicant: LG Energy Solution, Ltd., Seoul 07335 (KR)
(72) Inventor: Han, Seungwon, Daejeon 34122 (KR); Kong, Seungjin, Daejeon 34122 (KR); Sin, Jehwan, Daejeon 34122 (KR); Lee, Borahm, Daejeon 34122 (KR)
(74) Representative: Plasseraud IP
(86) International application number: PCT/KR2024/015727
(87) International publication number: WO 2025/135430

(57) **Abstract**

A cell block fixing structure for battery module assembly, including a jig moving body positioned above a module frame when the module frame is placed on a welding machine and fixed, and a fixing jig connected to a lower end of the jig moving body, wherein the cell block assembly includes at least one terminal busbar formed to protrude to the outside of the module frame on one side of the module frame, at least one terminal hole is formed in the at least one terminal busbar is provided. The jig moving body moves downward such that the fixing jig is inserted and fitted into the at least one terminal hole at the time of welding the module frame.

## Description

### TECHNICAL FIELD

The present disclosure relates to a cell block fixing structure for battery module assembly for fixing the position of a cell block assembly disposed in a U-frame at the time of assembling a battery module by welding a battery module frame.

### BACKGROUND

A secondary battery refers to a battery that can be charged and discharged, unlike a primary battery that cannot be charged, and is applied not only to portable devices but also to electric vehicles (EVs) and hybrid electric vehicles (HEVs) that are driven using an electric drive source.

Currently widely used types of secondary batteries include lithium ion batteries, lithium polymer batteries, nickel cadmium batteries, nickel hydrogen batteries, nickel zinc batteries, etc. The operating voltage of such a unit secondary battery cell, i.e., a unit battery cell, is approximately 2.5 V to 4.6 V. Therefore, when a higher output voltage is required, a battery pack is configured by connecting multiple battery cells in series. In addition, a battery pack is configured by connecting multiple battery cells in parallel depending on the charge/discharge capacity required for the battery pack. Therefore, the number of battery cells included in the battery pack can be set in various ways depending on the required output voltage or charge/discharge capacity.

When a battery pack is configured by connecting multiple battery cells in series/parallel, it is common to first configure a battery module composed of at least one battery cell, preferably multiple battery cells, and then use at least one battery module and add other components to configure the battery pack. Here, the battery module refers to a component in which multiple battery cells are connected in series or parallel, and the battery pack may refer to a component in which multiple battery modules are connected in series or parallel to increase capacity and output.

A battery module is configured by electrically connecting multiple cells using a busbar.

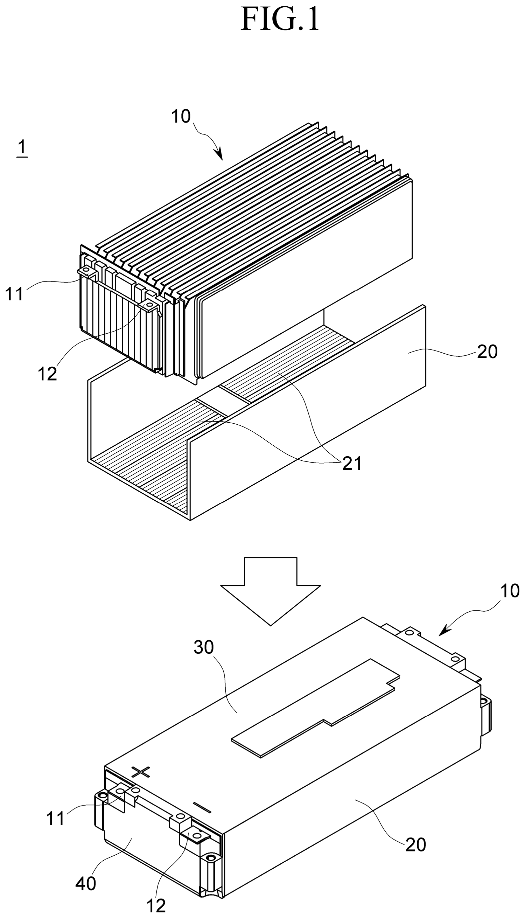

FIG. 1 is a diagram briefly illustrating a conventional battery module assembling process.

Referring to FIG. 1, when assembling a battery module 1, a cell block assembly 10 is placed at a controlled position within a U-frame 20 and then positional restraint is secured using a thermal resin 21.

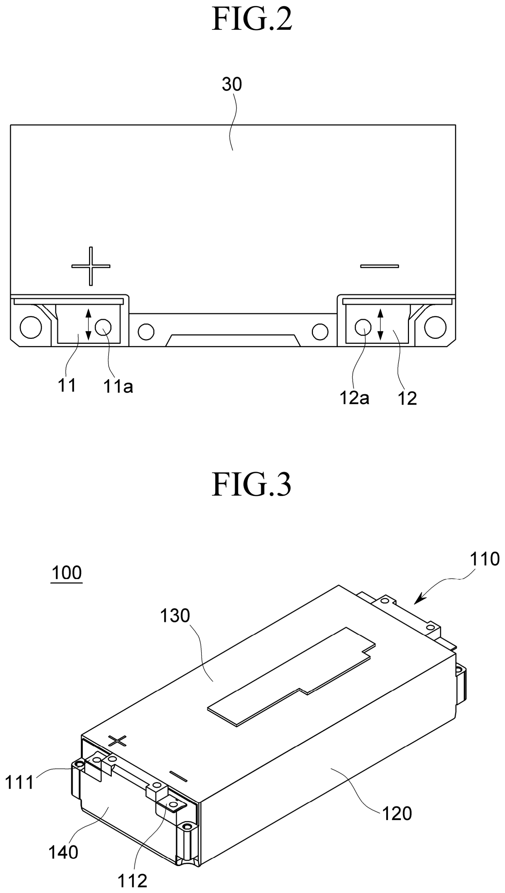

However, before the thermal resin 21 hardens, the positional restraint of the cell block assembly 10 is insufficient and thus there is a possibility of the cell block assembly 10 moving within the gap between a module frame and the cell block assembly 10 during a module frame welding process (refer to FIG. 2).

Referring to FIG. 2, before the thermal resin 21 hardens, the cell block assembly 10 may move unintentionally in the direction of the arrow due to insufficient positional restraint of the cell block assembly 10, resulting in a problem that the positional accuracy of terminal holes 11a and 12a formed by punching terminal busbars 11 and 12 of the cell block assembly 10 protruding to the outside of the module frame decreases.

Here, the positional accuracy indicates a degree to which a position is accurate with respect to a reference plane or straight line.

### SUMMARY

### [TECHNICAL PROBLEMS]

An object of the present disclosure is to provide a cell block fixing structure for battery module assembly which can improve the positional accuracy of terminal holes of a cell block assembly during module frame welding in a battery module manufacturing process.

### [TECHNICAL SOLUTION]

A cell block fixing structure for battery module assembly according to one aspect of the present disclosure includes a jig moving body positioned above a module frame accommodating a cell block assembly including a plurality of battery cells in a state in which the module frame is placed on a welding machine and fixed, and a fixing jig connected to a lower end of the jig moving body, wherein the cell block assembly includes a terminal busbar formed to protrude to the outside of the module frame on one side of the module frame, a terminal hole is formed in the terminal busbar, and the jig moving body moves downward such that the fixing jig is inserted and fitted into the terminal hole at a time of welding the module frame.

Furthermore, the fixing jig may have a tapered shape in which a lower part is narrower.

Furthermore, the fixing jig may be connected to the lower end of the jig moving body by a ball joint such that the fixing jig can rotate relative to the jig moving body.

Furthermore, the fixing jig may include an upper jig body and a lower jig head, and the jig head may have a shape convex downward.

Furthermore, the terminal busbar may include a first positive terminal busbar and a second negative terminal busbar, and the terminal hole may include a first terminal hole formed in the first terminal busbar and a second terminal hole formed in the second terminal busbar.

Furthermore, the fixing jig may be provided as a pair of fixing jigs to be respectively inserted and fitted into the first terminal hole and the second terminal hole.

Furthermore, the cell block assembly may be restrained from moving relative to the module frame in a plane direction when the fixing jigs are inserted and fitted into the first terminal hole and the second terminal hole, and the plane direction may be perpendicular to the downward movement direction of the jig moving body.

Furthermore, the jig moving body may be connected to an actuator fixed to the welding machine, and the jig moving body may move up and down according to operation of the actuator.

Furthermore, the cell block fixing structure may further include a spring provided outside the jig moving body such that one end of the spring is disposed in contact with the fixing jig.

### [EFFECT OF INVENTION]

According to the present disclosure, the terminal holes of the cell block assembly are restrained by a fixing jig during the process of welding a module frame to assemble a battery module, thereby improving the positional accuracy of the terminal holes.

### BRIEF DESCRIPTION OF THE DRAWINGS

FIG. 1 is a diagram briefly showing a conventional battery module assembling process.
FIG. 2 is a diagram showing the movement of a cell block assembly in the conventional battery module assembling process.
FIG. 3 is a diagram showing a battery module to which a cell block fixing structure for battery module assembly according to an aspect of the present disclosure is applied.
FIG. 4 is an enlarged view of a terminal busbar of a cell block assembly in the battery module of FIG. 3.
FIG. 5 is a diagram showing a jig moving body and a fixing jig which are components of the cell block fixing structure for battery module assembly according to an aspect of the present disclosure.
FIG. 6 is a diagram showing a state in which the fixing jig of the cell block fixing structure for battery module assembly according to an aspect of the present disclosure moves downward to be inserted into a terminal hole of the battery module.
FIG. 7 is a diagram showing a state in which the fixing jig of the cell block fixing structure for battery module assembly according to an aspect of the present disclosure moves downward while not being aligned with a terminal hole of the battery module.
FIG. 8 is a diagram showing a state in which the fixing jig of FIG. 7 is inserted and fitted into a terminal hole while being rotated.
FIG. 9 is a diagram showing a welding machine for welding a module frame for assembling a battery module.

### DETAILED DESCRIPTIONS

The advantages and features of the present disclosure, and the methods for achieving the same will become clear with reference to the aspects described below in conjunction with the accompanying drawings. However, the present disclosure is not limited to the aspects disclosed below, but may rather be implemented in various different forms, and these aspects are provided only to make the present disclosure complete and to fully inform those skilled in the art of the scope of the disclosure, and the present disclosure is defined only by the scope of the claims. Accordingly, in some aspects, well-known process steps, well-known device structures, and well-known techniques are not specifically described in order to avoid ambiguity in the interpretation of the present disclosure. Like reference numerals refer to like elements throughout the specification.

In this specification, when a part is said to be connected to another part, this includes not only cases where they are directly connected, but also cases where they are connected with other elements in between. In addition, when a part is said to include a certain component, this does not mean that other components are excluded but rather that other components can be included unless there is a specific description to the contrary.

Unless otherwise defined, all terms (including technical and scientific terms) used in this specification may be used in a meaning that can be commonly understood by those skilled in the art to which the present disclosure pertains. In addition, terms defined in a commonly used dictionary will not be interpreted ideally or excessively unless they are explicitly specifically defined.

Hereinafter, a cell block fixing structure for battery module assembly according to the present disclosure will be described in detail with reference to FIGS. 3 to 9.

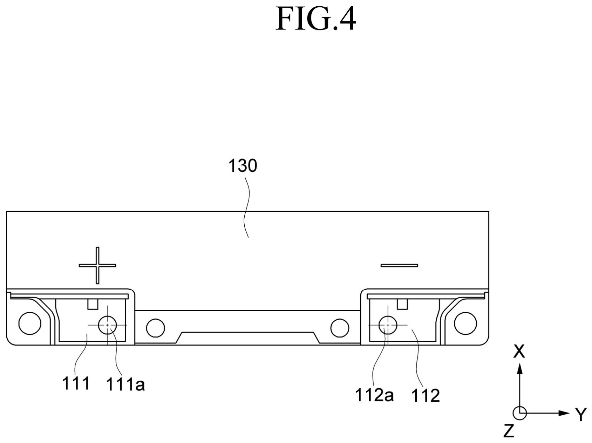

FIG. 3 shows a battery module to which a cell block fixing structure for battery module assembly according to an aspect of the present disclosure is applied, and FIG. 4 is an enlarged view of a terminal busbar of the cell block assembly in the battery module of FIG. 3.

In order to assemble a battery module 100, a cell block assembly 110 including a plurality of battery cells is placed at a controlled position within a U-frame 120 to which a thermal resin is applied. The positional restraint of the cell block assembly 110 is secured by hardening the thermal resin, but the cell block assembly 110 may move within a gap between a module frame and the cell block assembly 110 before the thermal resin hardens.

The cell block assembly 110 includes terminal busbars 111 and 112 formed on one side thereof, and terminal holes 111a and 112a are formed in the terminal busbars 111 and 112.

The module frame that accommodates the cell block assembly 110 includes the U-frame 120 and further includes an upper frame 130 that covers the upper part after the cell block assembly 110 is placed in the U-frame 120.

The terminal busbars 111 and 112 protrudes to the outside of the module frame.

If the cell block assembly 110 is not fixed to a controlled position within the module frame and moves within the module frame before the thermal resin hardens, the terminal holes 111a and 112a formed in the terminal busbars 111 and 112 are not in correct positions, resulting in positional misalignment.

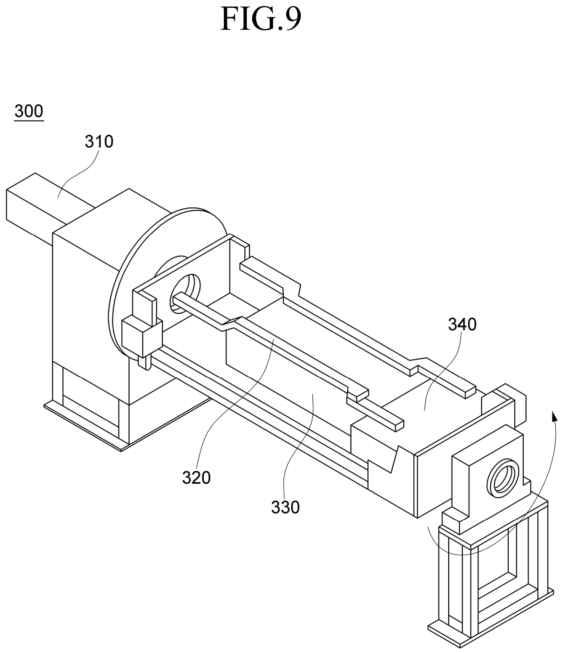

In order to assemble the battery module 100, a process of welding the module frame is required. Here, welding is performed while the thermal resin does not completely harden, and during this welding process, the battery module 100 is rotated while being fixed to a welding machine 300 (refer to FIG. 9). As the battery module 100 rotates, the cell block assembly 110 may move relative to the module frame.

The cell block fixing structure for battery module assembly according to an aspect of the present disclosure can improve the positional accuracy by restrain the movement of the cell block assembly 110 during the welding process for the module frame, thereby ensuring that the terminal holes 111a and 112a of the terminal busbars 111 and 111 are in correct positions to improve positional accuracy.

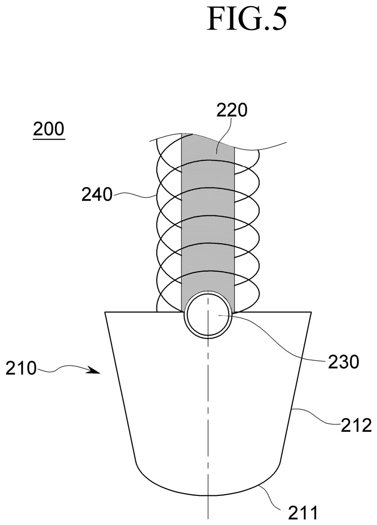

FIG. 5 shows components of the cell block fixing structure for battery module assembly according to an aspect of the present disclosure, which are a jig moving body and a fixing jig. The cell block fixing structure for battery module assembly according to an aspect of the present disclosure will be described with reference to FIG. 5.

The cell block fixing structure for module assembly includes a jig moving body 220 formed in a bar shape and a fixing jig 210 connected to a lower end of the jig moving body 220.

The fixing jig 210 is connected to the lower end of the jig moving body 220 by a ball joint 230 such that it can rotate relative to the jig moving body 220.

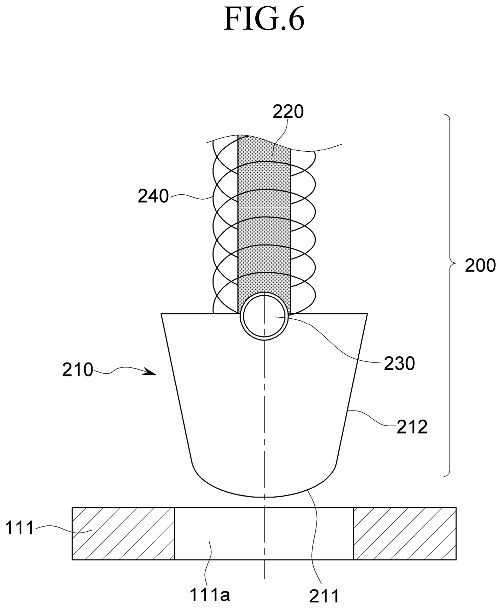

FIG. 6 shows a state in which the fixing jig of the cell block fixing structure for battery module assembly according to an aspect of the present disclosure moves downward to be inserted into a terminal hole of a battery module.

The jig moving body 220 and the fixing jig 210 are placed above the module frame in a state in which the module frame accommodating the cell block assembly 110 including a plurality of battery cells is placed on the welding machine 300 and fixed. Specifically, the jig moving body 220 and the fixing jig 210 are placed above the terminal holes 111a and 112a of the terminal busbars 111 and 112 formed on one side of the cell block assembly 110 accommodated in the module frame.

The jig moving body 220 is connected to an actuator fixed to the welding machine 300 and can move up and down according to the operation of the actuator.

In a state in which the module frame is fixed to the welding machine 300, the jig moving body 220 moves downward according to the operation of the actuator such that the fixing jig 210 is inserted and fitted into the terminal hole 111a or 112a.

The terminal busbars 111 and 112 include a positive first terminal busbar 111 and a negative second terminal busbar 112.

The terminal holes 111a and 112a include a first terminal hole 111a formed in the first terminal busbar 111 and a second terminal hole 112a formed in the second terminal busbar 112.

A pair of fixing jigs 210 are provided such that they are respectively inserted and fitted into the first terminal hole 111a and the second terminal hole 112a.

The fixing jig 210 has a tapered shape in which the lower part is narrower. Since the fixing jig 210 has a tapered shape, the pair of fixing jigs 210 can be inserted and fitted into the first terminal hole 111a and the second terminal hole 112a and thus the movement of the cell block assembly 110 can be restrained in a plane direction.

Here, the plane direction means a plane direction perpendicular to the downward movement direction of the jig moving body 220, and is the X-Y plane direction illustrated in FIG. 4.

The cell block assembly 110 is restrained from moving relative to the module frame in the plane direction, and thus the positional accuracy of the terminal holes 111a and 112a is improved.

The fixing jig 210 includes an upper jig body 212 and a lower jig head 211, and it is preferable that the jig head 211 have a shape convex downward. The jig head 211 having a shape convex downward can be easily inserted into the terminal holes 111a and 112a.

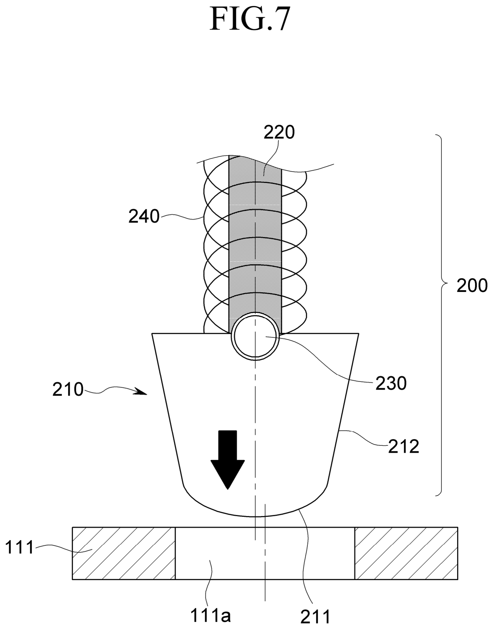

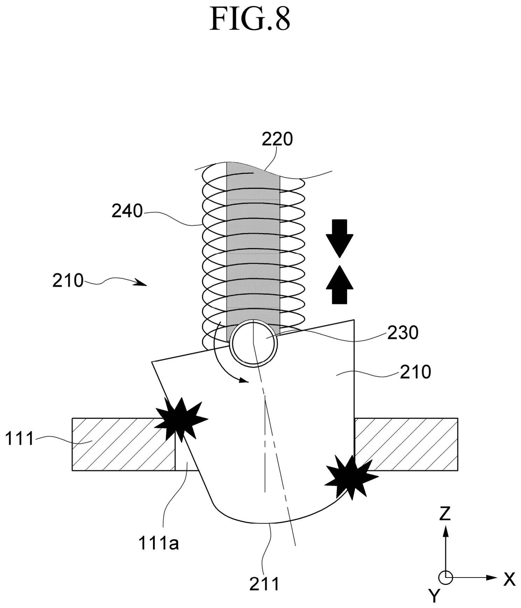

FIG. 7 shows a state in which the fixing jig of the cell block fixing structure for battery module assembly according to an aspect of the present disclosure moves downward while not being aligned with a terminal hole of the battery module, and FIG. 8 shows a state in which the fixing jig is inserted and fitted into a terminal hole while being rotated.

The fixing jig 210 is connected to the lower end of the jig moving body 220 by the ball joint 230 such that it can rotate relative to the jig moving body 220. The fixing jig 210 can rotate about the ball joint 230 as an axis.

When the fixing jig 210 moves downward while not being aligned with the terminal hole 111a, the fixing jig 210 rotates and is inserted and fitted into the terminal hole 111a as shown in FIG. 8.

That is, since the fixing jig 210 can rotate relative to the jig moving body 220, the fixing jig 210 can be inserted and fitted into the terminal hole 111a even when the terminal hole 111a and the fixing jig 210 are not precisely aligned with each other, thereby restraining the cell block assembly 110 from moving in the plane direction.

Meanwhile, a spring 240 is disposed outside the jig moving body 220, and one end of the spring 240 is fixed in contact with the fixing jig 210.

As shown in FIG. 8, when the fixing jig 210 is inserted and fitted into the terminal hole 111a while rotating, the spring 240 serves to apply elastic force in a direction opposite to the rotation direction of the fixing jig 210.

By applying the elastic force of the spring 240 to the fixing jig 210, the fixing jig 210 can be prevented from rotating excessively.

FIG. 9 shows a welding machine for welding a module frame for assembling a battery module.

The welding machine 300 includes a U-frame clamp 330 for fixing the U-frame 120 of the battery module 100, an upper frame clamp 320 for fixing the upper frame 130, and an end plate clamp 340 for fixing an end plate (not shown).

In addition, the welding machine 300 further includes a motor 310 for rotating the battery module 100. Welding of the module frame is performed while the battery module 100 is rotated by the operation of the motor 310.

The cell block assembly 110 positioned within the module frame is fixed by the fixing jig 210 and is restrained from moving in the plane direction, and thus the cell block assembly 110 remains in place even when the thermal resin does not harden.

That is, in the process of welding the module frame to assemble the battery module 100, the terminal holes 111a and 112a of the cell block assembly 110 are restrained by the fixing jig 210, thereby improving the positional accuracy of the terminal holes 111a and 112a

The present disclosure has been described with reference to preferred aspects as described above, but is not limited to the above aspects, and various changes and modifications may be made by those skilled in the art within the scope that does not depart from the spirit of the present disclosure.

### [INDUSTRIAL APPLICABILITY]

The present disclosure can provide a cell block fixing structure for battery module assembly, in which terminal holes of a cell block assembly are fixed by a fixing jig during the process of welding a module frame to assemble a battery module, thereby improving the positional accuracy of the terminal holes.

## Claims

1. A cell block fixing structure for battery module assembly, comprising:
a jig moving body configured to be positioned above a module frame when the module frame is placed on a welding machine and fixed, the module frame accommodating a cell block assembly having a plurality of battery cells; and
a fixing jig connected to a lower end of the jig moving body,
wherein the cell block assembly includes at least one terminal busbar protruding outside of the module frame on a side of the module frame, at least one terminal hole is formed in the terminal busbar, and the jig moving body is configured to move downward such that the fixing jig inserts and fits into the at least one terminal hole at a time of welding the module frame.

2. The cell block fixing structure of claim 1, wherein the fixing jig has a tapered shape in which a lower part is narrower.

3. The cell block fixing structure of claim 2, wherein the fixing jig is connected to the lower end of the jig moving body by a ball joint such that the fixing jig is able to rotate relative to the jig moving body.

4. The cell block fixing structure of claim 3, wherein the fixing jig includes an upper jig body and a lower jig head,
wherein the jig head has a convex downward shape.

5. The cell block fixing structure of claim 4, wherein the at least one terminal busbar includes a first positive terminal busbar and a second negative terminal busbar, and the at least one terminal hole includes a first terminal hole formed in the first positive terminal busbar and a second terminal hole formed in the second negative terminal busbar.

6. The cell block fixing structure of claim 5, wherein the fixing jig is one of a pair of fixing jigs configured to respectively insert and fitt into the first terminal hole and the second terminal hole.

7. The cell block fixing structure of claim 6, wherein the cell block assembly is configured to be restrained from moving relative to the module frame in a plane direction when the fixing jigs are inserted and fitted into the first terminal hole and the second terminal hole,
wherein the plane direction is perpendicular to the downward movement direction of the jig moving body.

8. The cell block fixing structure of claim 7, wherein the jig moving body is connected to an actuator fixed to the welding machine, and the jig moving body is configured to move up or down according to operation of the actuator.

9. The cell block fixing structure of claim 3, further comprising a spring provided outside the jig moving body such that one end of the spring is disposed in contact with the fixing jig.
